# EUROPÄISCHE PATENTSCHRIFT

(11) **EP 1 420 493 B1**
(45) Veröffentlichungstag und Bekanntmachung des Hinweises auf die Patenterteilung: **04.07.2007**
(21) Anmeldenummer: 03021420.9
(22) Anmeldetag: 23.09.2003
(51) Int. Cl.: H02G 3/04

(54) **Kabelrückhalteelement für einen Verdrahtungskanal**
Cable retaining element for wiring channel
Elément de retenue de câble pour canalisation de câblage .

(30) Priorität: 16.11.2002 DE 20217739 U
(43) Veröffentlichungstag der Anmeldung: 19.05.2004
(73) Patentinhaber: Tehalit GmbH, 67716 Heltersberg (DE)
(72) Erfinder: Schwarz, Jürgen, 67705 Trippstadt (DE)
(74) Vertreter: Patentanwälte Möll und Bitterich

(56) Entgegenhaltungen:
- FR-A- 2 777 129
- US-A- 3 890 459

## Beschreibung

Die Erfindung betrifft Kabelrückhalteelemente für Verdrahtungskanäle gemäß dem Oberbegriff des Anspruchs 1.

Verdrahtungskanäle mit U-förmigen Unterteilen, deren Seitenwangen aus Stegen geformt sind, sind hinreichend bekannt. Üblicherweise sind die Stege, die in regelmäßigen Abständen zueinander angeordnet sind, an ihrem Ende so geformt, dass ein Deckel lösbar aufgerastet werden kann (US 3 890 459, FR 2 777 129).

Um bei der Montage das Herausfallen der Kabel aus dem geöffneten Kanalunterteil zu verhindern, werden Kabelrückhalteleisten verwendet.

Bekannt ist eine winkelförmige Rückhalteklammer mit einem Rückhalteschenkel zur Lagesicherung der Leitungen und einem Tragschenkel zur Befestigung an den Stegen der Kanalseitenwand. Der Tragschenkel besteht aus zwei miteinander verbundenen Platten, deren Abstand der Stegdicke des Verdrahtungskanals entspricht. Das T-förmige Verbindungsteil zwischen den Platten lagert auf den seitlich abstehenden Stegenden auf und verhindert das vertikale Verrutschen des Kabelrückhalteelements. Die Breite des Verbindungsteils entspricht dem Abstand zweier Stege (US 3 890 459). Da die Stege der Verdrahtungskanäle sehr dünn und damit leicht verformbar sind, weichen sie bei Belastung zur Seite aus und die Rückhalteklammern verlieren ihren Halt.

Weiterhin ist eine Rückhalteklammer mit mehreren paarweise angeordneten, hakenförmigen Einrastzungen bekannt, deren horizontaler Abstand jeweils einer Stegbreite entspricht und die in speziell vorgesehene Öffnungen in den Stegen einrasten (FR 2 777 129 A1). Der Rückhalteschenkel dieser Klammern ist sehr kurz und nur wenig aus der Senkrechten geneigt, so dass jeweils zwei Klammern gegenüber angeordnet werden müssen, um eine Halterung für die zu verlegenden Leitungen zu erzeugen.

Vor diesem Hintergrund besteht die Aufgabe der vorliegenden Erfindung darin, ein Kabelrückhalteelement so auszubilden, dass es sehr leicht und zeitsparend montiert werden kann und gleichzeitig zur Stabilisierung der Stege der Kanalseitenwände beiträgt.

Diese Aufgabe wird durch ein Kabelrückhalteelement mit den Merkmalen des Anspruchs 1 gelöst. Vorteilhafte Weiterbildungen ergeben sich aus den Unteransprüchen.

Anhand der Zeichnungen soll die Erfindung in Form eines Ausführungsbeispiels näher erläutert werden. Es zeigen
- Fig. 1: eine Seitenansicht eines Verdrahtungskanals mit einem erfindungsgemäßen Kabelrückhalteelement
- Fig. 2: ausschnittsweise eine Draufsicht auf den Verdrahtungskanal der Fig. 1, teilweise geschnitten, entlang der Linie II-II,
- Fig. 3: ein Kabelrückhalteelement perspektivisch von schräg oben und
- Fig. 4: das Kabelrückhalteelement der Fig. 3 perspektivisch von schräg unten.

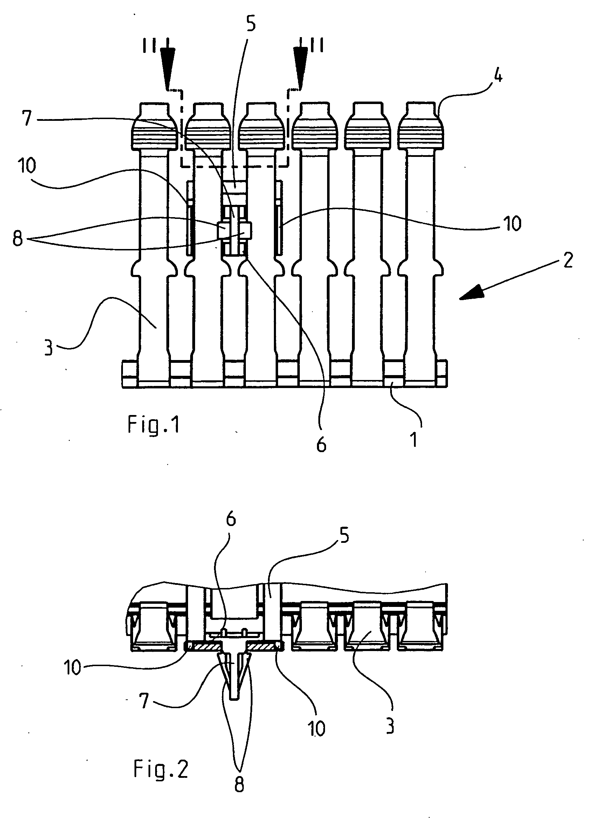

Fig. 1 zeigt eine Seitenansicht der Seitenwand 2 eines Verdrahtungskanals. Auf einem Boden 1 sind in gleichmäßigen Abständen Stege 3 mit Deckelhalteprofilen 4 an deren oberem Ende angeordnet.

Ein Kabelrückhalteelement ist an zwei benachbarten Stegen 3 montiert. Eine an einem Stützschenkel 6 des Kabelrückhalteelements angefügte Haltenase 7 mit zwei keilförmigen, federnden Zungen 8 ist so weit durch den Zwischenraum der benachbarten Stege 3 hindurch geführt, dass der Stützschenkel 6 an der Steginnenseite anliegt und die Zungen 8 sich hinter den beiden Stegen 3 aufspreizen. Am Stützschenkel 6 sind beidseitig Randleisten 10 angeformt, die die äußeren Kanten der beiden Stege 3 einfassen und diese stabilisieren.

Fig. 2 zeigt eine Draufsicht auf den Verdrahtungskanal, wobei die zwei das Kabelrückhalteelement tragenden Stege 3 zum besseren Verständnis abgebrochen dargestellt sind. An den Stützschenkel 6 des Kabelrückhalteelements ist ein Rückhalteschenkel 5 angeformt, der in das Innere des Verdrahtungskanals ragt. Während des Montagevorgangs werden die keilförmigen federnden Zungen 8 zusammengedrückt, so dass sie durch den Zwischenraum der beiden Stege 3 gleiten können. Wenn der Stützschenkel 6 an der Steginnenseite anliegt, spreizen sich die Zungen 8 an der Stegaußenseite wieder in ihre Ausgangslage auf und bilden mit ihrer Hinterkante an der Außenseite der Stege 3 eine Verriegelung. Die Randleisten 10 verhindern das seitliche Ausweichen der Stege 3 und stabilisieren dadurch den Verdrahtungskanal.

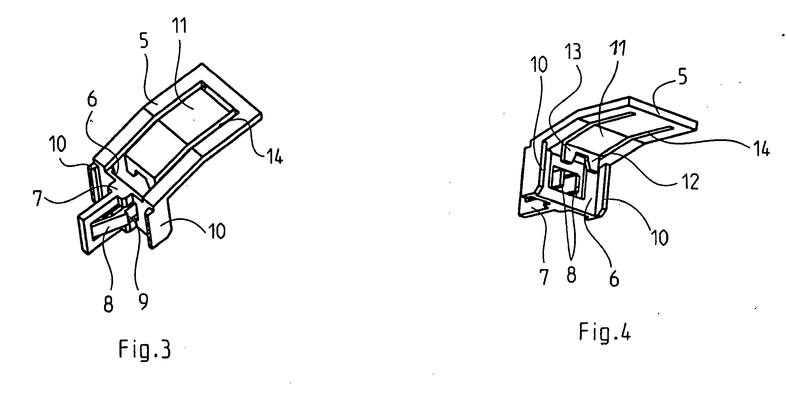

Fig.3 zeigt eine weitere Ausbildung eines Kabelrückhalteelements perspektivisch schräg von oben. Der Rückhalteschenkel 5 und der Stützschenkel 6 bilden zusammen einen Winkel von ungefähr 90 °. Am Stützschenkel 6 sind seitlich die beiden Randleisten 10 und in der Mitte die Haltenase 7 angeformt. An den breiten Enden der beiden keilförmigen federnden Zungen 8 ist jeweils ein senkrechter Falz 9 vorgesehen.

Wenn die Haltenase 7 soweit durch den Zwischenraum geschoben ist, dass der Stützschenkel 6 innen am Steg 3 anliegt und das Zungenende mit dem senkrechten Falz 9 erreicht ist, federn die Zungen 8 in ihre Ausgangslage zurück. Die Stege 3 sind dann von den Randleisten 10, dem Stützschenkel 6 und dem senkrechten Falz 9 der Zungen 8 eingefasst, wobei die eine Kante des Falzes 9 eine Verriegelung bildet.

Fig. 4 zeigt das Kabelrückhalteelement der Fig. 3 schräg von unten. Aus dieser Perspektive wird der Mechanismus einer Lösevorrichtung sichtbar, mit der das Kabelrückhalteelement einfach und ohne zusätzliches Werkzeug entfernt werden kann. Die Lösevorrichtung besteht aus einem Betätigungshebel 11, einem Löseschenkel 12 und daran zwei Löseschrägen 13. Vorteilhafterweise wird der Betätigungshebel 11 durch einen U-förmigen Freischnitt im Rückhalteschenkel 5 erzeugt. Der Löseschenkel 12 ist ungefähr in einem Winkel von 90° an die Unterseite des Betätigungshebels 11 angeformt und besitzt einen trapezförmigen Ausschnitt. Beim Herunterdrücken des Betätigungshebels 11 umfassen die durch den trapezförmigen Ausschnitt entstandenen keilförmigen Löseschrägen 13 die Enden der federnden Zungen 8 und drücken sie so weit zusammen, dass die durch den senkrechten Falz 9 gebildete Verriegelung geöffnet wird.

## Patentansprüche

1. Kabelrückhalteelement für einen Verdrahtungskanal, der
- einen Boden (1),
- zwei Seitenwände (2), gebildet durch in Abständen angeordnete Stege (3),
- und gegebenenfalls Deckelhalteprofile (4) an den freien Enden der Stege (3) aufweist,
umfassend
- einen Rückhalteschenkel (5)
- einen Stützschenkel (6)
- und eine Befestigungsvorrichtung zur lösbaren Befestigung des Kabelrückhalteelements an zwei benachbarten Stegen (3),
**gekennzeichnet durch** die Merkmale:
die Befestigungsvorrichtung umfasst
- eine Haltenase (7) mit zwei federnden, keilförmigen Zungen (8), die sich hinter den Stegen (3) aufspreizen,
- die maximale Breite der Haltenase (7) entspricht dem lichten Abstand zweier Stege (3),
- am Stützschenkel (6) sind Randleisten (10) angeformt, die jeweils die Außenkanten der beiden Stege (3) einfassen.

2. Kabelrückhalteelement gemäß Anspruch 1, **dadurch gekennzeichnet, dass** am breiten Ende der federnden keilförmigen Zungen (8) jeweils ein senkrechter Falz (9) vorgesehen ist, dessen Tiefe der Materialstärke der Stege (3) entspricht.

3. Kabelrückhalteelement gemäß den Ansprüchen 1 und 2, **dadurch gekennzeichnet, dass** die federnden Zungen (8) mit ihrem senkrechten Falz (9) eine Verriegelung für die Stege (3) bilden.

4. Kabelrückhalteelement gemäß den Ansprüchen 2 und 3, **dadurch gekennzeichnet, dass** eine Lösevorrichtung mit einem Betätigungshebel (11) und einem Löseschenkel (12) mit keilförmigen Löseschrägen (13) zum Lösen der aufgespreizten Zungen (8) vorgesehen ist.

5. Kabelrückhalteelement gemäß Anspruch 4, **dadurch gekennzeichnet, dass** der Betätigungshebel (11) durch einen U-förmigen Freischnitt im Rückhalteschenkel (5) des Kabelrückhalteelements gebildet ist.

## Claims

1. Cable retaining element for a wiring duct, which has
- a bottom (1),
- two side walls (2), formed by webs (3) disposed at spacings,
- and optionally cover retaining profiles (4) at the free ends of the webs (3),
comprising
- a retaining limb (5),
- a support limb (6)
- and a fastening device for fastening the cable retaining element to two adjacent webs (3) in a releasable manner,
**characterised by** the features:
- the fastening device comprises
- a retaining lug (7) with two resilient, wedge-shaped tongues (8) which spread out behind the webs (3),
- the maximum width of the retaining lug (7) corresponds to the clearance of two webs (3),
- edge strips (10) are formed on the support limb (6), which strips in each case encompass the outer edges of the two webs (3).

2. Cable retaining element according to Claim 1, **characterised in that** a respective perpendicular fold (9) is provided at the wide end of the resilient, wedge-shaped tongues (8), the depth of which fold corresponds to the material thickness of the webs (3).

3. Cable retaining element according to Claims 1 and 2, **characterised in that** the resilient tongues (8) form, with their perpendicular fold (9), a locking mechanism for the webs (3).

4. Cable retaining element according to Claims 2 and 3, **characterised in that** a release device with an actuating lever (11) and a release limb (12) with wedge-shaped release slopes (13) is provided to release the spread-out tongues (8).

5. Cable retaining element according to Claim 4, **characterised in that** the actuating lever (11) is formed by a U-shaped cutout in the retaining limb (5) of the cable retaining element.

## Revendications

1. Élément de retenue de câble pour une goulotte de câblage présentant :
- un fond (1),
- deux parois latérales (2) formées par des ailes (3) espacées,
- et, le cas échéant, des profils de fixation de couvercle (4) aux extrémités libres des ailes (3), qui comprend
- une branche de retenue (5),
- une branche d'appui (6),
- et un dispositif de fixation pour fixer de manière amovible l'élément de retenue de câble à deux ailes (3) voisines,
**caractérisé par** les caractéristiques suivantes :
le dispositif de fixation comprend
- une saillie de retenue (7) dotée de deux languettes cunéiformes (8) faisant ressort, qui s'écartent derrière les ailes (3),
- la largeur maximale de la saillie de retenue (7) correspond à l'écart entre deux ailes (3),
- des rebords (10) sont ménagés sur la branche d'appui (6), qui entourent chaque fois les arêtes extérieures des deux ailes (3).

2. Élément de retenue de câble selon la revendication 1, **caractérisé en ce qu'**un pli vertical (9) est chaque fois prévu à l'extrémité large des languettes cunéiformes (8) faisant ressort, dont la profondeur correspond à l'épaisseur des ailes (3).

3. Élément de retenue de câble selon les revendications 1 et 2, **caractérisé en ce que** les languettes (8) faisant ressort forment avec leur pli vertical (9) un dispositif de verrouillage pour les ailes (3).

4. Élément de retenue de câble selon les revendications 2 et 3, **caractérisé en ce qu'**est prévu un dispositif de libération comprenant un levier d'actionnement (11) et une branche de libération (12) dotée de rampes de libération cunéiformes (13) pour libérer les languettes écartées (8).

5. Élément de retenue de câble selon la revendication 4, **caractérisé en ce que** le levier d'actionnement (11) est formé par une découpe en U dans la branche de retenue (5) de l'élément de retenue de câble.
